(19) Europäisches Patentamt
European Patent Office
Office européen des brevets

(11) **EP 4 738 217 A1**

(12) **EUROPEAN PATENT APPLICATION**

(43) Date of publication:
06.05.2026 Bulletin 2026/19

(21) Application number: 25151496.4

(22) Date of filing: 13.01.2025

(51) International Patent Classification (IPC):
**G06Q 10/067** (2023.01)     **G06Q 10/0831** (2023.01)
**G06Q 30/018** (2023.01)     **G06Q 40/10** (2023.01)
**G06Q 40/12** (2023.01)

(52) Cooperative Patent Classification (CPC):
**G06Q 10/0831; G06Q 10/067; G06Q 30/018;
G06Q 40/10; G06Q 40/12; G06Q 40/123**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.10.2024 CN 202411527269

(71) Applicant: **Cedars Digital Pte. Ltd.**
**048619 Singapore (SG)**

(72) Inventors:
• **CHEN, Fu-Ming**
**New Taipei City (TW)**
• **CHANG, Mao-Yen**
**Changbin Township, Taitung County (TW)**

(74) Representative: **Viering, Jentschura & Partner
mbB**
**Patent- und Rechtsanwälte**
**Am Brauhaus 8**
**01099 Dresden (DE)**

(54) **CARBON TARIFF CALCULATION METHOD AND SERVICE SYSTEM**

(57)     A carbon tariff calculation method and a service system (100). The service system (100) that runs the carbon tariff calculation executes the carbon tariff calculation method through a computing circuit (101). Enterprise operation and sales data (171) is obtained from an enterprise database to obtain a product quantity, a carbon footprint, and product carbon emissions of an enterprise export product. Then, carbon tariff regulations (173) of an import location that the enterprise export product is imported to are introduced, including obtaining a carbon credit price (177) and tax items of the import location. Simultaneously, a tax exemption quota of the import location is introduced, and an amount of a paid tax of the enterprise can be obtained. A carbon tariff is calculated based on the product quantity, the product carbon emissions, the carbon credit price (177), the tax exemption quota, and the paid tax, and a carbon tariff declaration report is created.

FIG. 1

**Description**

**FIELD OF THE INVENTION**

The present invention relates to a system that assists enterprises in carbon tariff declaration, and more particularly to a carbon tariff calculation method and service system implemented by using computer and connecting external information.

**BACKGROUND OF THE INVENTION**

Greenhouse gas (GHG) refers to a gas that can absorb and re-radiate infrared radiations emitted from the surface of the earth. Greenhouse gas mainly includes carbon dioxide ($CO_2$), methane ($CH_4$), nitrous oxide ($N_2O$), hydrofluorocarbons (HFCs), perfluorocarbons (PFCs), sulfur hexafluoride ($SF_6$), nitrogen trifluoride ($NF_3$), etc. The increase of these gases is mainly a result of human activities such as burning fossil fuel, industrial manufacturing, and agricultural activities that lead to global warming, extreme weather events, rising sea levels, etc., which can cause serious impact on humanity and the ecosystem.

The United Nations has called for immediate action on carbon reduction, and "net-zero carbon reduction" has become a common global topic. International organizations have further provided net-zero standards, with the aim of limiting global warming to be within a certain range (such as within 1.5°C). Furthermore, in order to effectively control industrial carbon emission, in addition to implementing greenhouse gas inventory and formulating carbon reduction strategies, various countries or international organizations have also provided carbon tariff measures.

For example, the "Carbon Border Adjustment Mechanism (CBAM)" implemented by the EU stipulates that goods exported to the EU from various countries must bear the cost of carbon reduction together with EU manufacturers. Further, regulated high carbon emission products need to obtain CBAM certificates before they can be exported to the EU, and specific products need to have CBAM certificates purchased before entering the EU, in which CBAM certificates are an implementation of carbon tariffs. For example, in the early stages of implementing CBAM, the EU will require steel, cement, fertilizers, aluminum, electricity, hydrogen, and other related commodities to declare product carbon emissions when the commodities are imported into the EU, such that the carbon costs that are incurred can be calculated, thereby forming the carbon tariffs for importing to the EU.

**SUMMARY OF THE INVENTION**

In order to provide a service of calculating carbon tariff for enterprises and manufacturers exporting products to countries (including the European Union) that collect carbon tariff on products, the present invention provides a carbon tariff calculation method and a service system that are implemented by using computers and network communication technology.

According to one embodiment, the service system executing a carbon tariff calculation includes a computing circuit, a memory module, a communication module, and an enterprise operation and sales database. The service system (i.e., the computer system) is connected to an enterprise database and a carbon tariff and regulations database through the communication module.

The carbon tariff calculation method is executed in the service system. In the method, the service system obtains enterprise operation and sales data from the enterprise database to obtain a product quantity, a carbon footprint, and product carbon emissions of an enterprise export product, introduces carbon tariff regulations of an import location that the enterprise export product is imported to, including obtaining a carbon credit price and tax collection items of the import location, and introduce a tax exemption quota of the import location. Then, the service system obtains an amount of a paid tax of an enterprise. Therefore, the service system may calculate a carbon tariff based on the product quantity, the product carbon emissions, the carbon credit price, the tax exemption quota, and the paid tax, and create a carbon tariff declaration report for the enterprise export product to the import location.

Furthermore, the service system can obtain a carbon credit price, a tax exemption quota, and product carbon footprint tax collection items of the import location from an external system, calculate the carbon tariff accordingly, and obtain the carbon tariff declaration report for the enterprise export product to the import location.

Moreover, in the service system, the carbon footprint of the enterprise export product is obtained through carbon inventory, and a full scope of organizational greenhouse gas are allocated to a raw material acquisition stage, a production and manufacturing stage, a distribution and sales stage, a product using stage, and a product disposal and recycle stage. The full range of organizational greenhouse gases includes direct greenhouse gas emissions, energy indirect greenhouse gas emissions, and other indirect greenhouse gas emissions.

According to one embodiment of the carbon tariff calculation method, the carbon tariff is equal to the product carbon emissions multiplied by the carbon credit price, and then multiplied by the product quantity.

Furthermore, the service system obtains the tax exemption quota and the carbon credit price of the import location from a carbon tariff and regulations database of the import location through an application program interface. The service system is further connected via respective application programming interfaces to a product carbon footprint system to obtain product carbon footprints; an enterprise operation and sales data system that provides the enterprise operation and sales data; a system of carbon tariff regulations, industries, products, and raw materials of each of countries to obtain the carbon tariff regulations of each of the countries including tax numbers of various taxable products; a carbon tariff collection item system of each of the countries to obtain taxable items in each of the countries; a carbon tariff exemption quota system in each of the countries to obtain tax exemption quotas set by each of the countries for the products; a local carbon credit price system in each of the countries to obtain the carbon credit price set by each of the countries; and a paid carbon price system of each of export countries to obtain the paid tax of the enterprise in a location that the product is manufactured in.

These and other aspects of the present invention will become apparent from the following description of the embodiment taken in conjunction with the following drawings and their captions, although variations and modifications therein may be affected without departing from the spirit and scope of the novel concepts of the invention.

## BRIEF DESCRIPTION OF THE DRAWINGS

The described embodiments may be better understood by reference to the following description and the accompanying drawings, in which:

FIG. 1 is a schematic diagram of a service system executing a carbon tariff calculation method;
FIG. 2 is a schematic diagram of a connection relationship between the service system and an external system;
FIG. 3 is a schematic diagram of a product carbon footprint process in enterprise operation and sales data;
FIG. 4 is a schematic diagram of a data relationship between organizational greenhouse gas inventory scopes and product carbon footprint stages;
FIG. 5 is a flowchart of the carbon tariff calculation method; and
FIG. 6 is a schematic diagram of the service system being applied to the European Union Carbon Border Adjustment Mechanism to declare a carbon tariff.

## DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides a carbon tariff calculation method and a service system for running carbon tariff calculations. The service system realizes enterprise carbon tariff calculation services through the cooperation of computer, software, and network. Through a software function, the service system obtains a product carbon footprint based on information provided by an enterprise, and combines enterprise operation and sales data, differences in carbon tariff items (e.g., HS Code or NAICS) in each of countries, item differences in product carbon footprints, differences in carbon tariff exemptions, and differences in local carbon credit prices, so as to simulate and calculate a corporate operating carbon tariff, and the calculated carbon tariff can also be imported into a profit and loss statement (P&L) of the enterprise.

In the present invention, computer technologies are used to realize the carbon tariff calculation method. With the increase in international awareness of carbon pricing, in 2023, bills related to the carbon tariff are enacted, such as the Carbon Border Adjustment Mechanism (CBAM) proposed by the European Union, and the Clean Competition Act (CCA) proposed by the United States. Because the complexity and frequent changes of the items of the regulations, the advancement of legal regulations with the times, and the general enterprise staffing requirements, the present invention provides solutions of simulating and calculating the carbon tariff for enterprises, so as to solve the shortage of professional personnel, monitor carbon border tariff bills and changes in various countries, and monitor changes in local carbon credit prices. Further, the carbon tariff can be imported into the profit and loss statement of the enterprise through simulation and calculation.

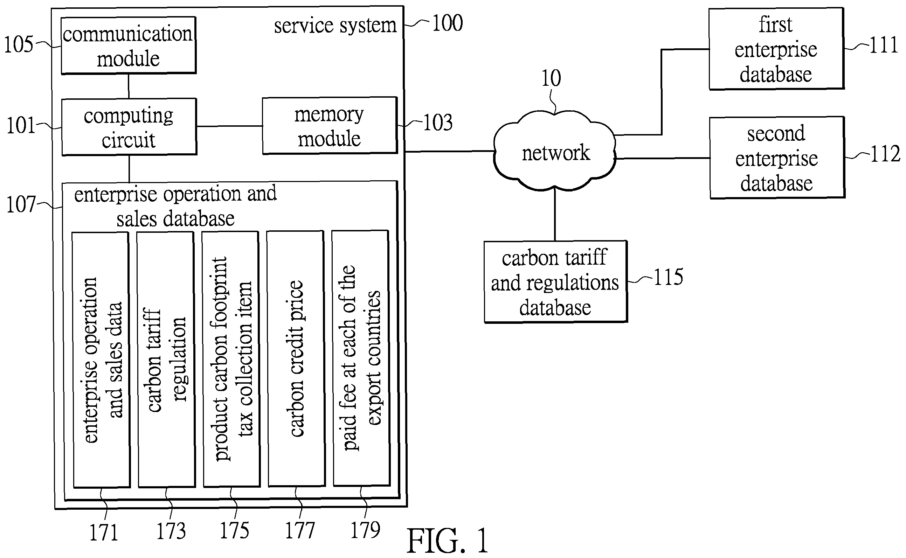

The service system that runs the carbon tariff calculation method is implemented by the cooperation of computer technology, software programs running in the service system, and network technology; reference can be made to one embodiment of the schematic diagram of the service system shown in FIG. 1.

The service system 100 shown in the figure includes a computer system, and the computer system implements the service system to assist enterprises in calculating the carbon tariff. The computer system includes main hardware components such as a computing circuit 101, a memory module 103, and a communication module 105, and the hardware components can cooperate with software components in the service system 100 to achieve the purpose of calculating the carbon tariff. The service system 100 uses software and storage devices to implement an enterprise operation and sales database 107 that is used to store enterprise operation and sales data 171 obtained from an enterprise. Further, the service system 100 obtains carbon tariff regulations 173 of each of countries (e.g., an import location/country), product carbon footprint tax collection items 175 and a carbon credit price 177 in each of the countries (referring to an import country of an enterprise export product), as well as a paid fee (i.e., a paid carbon tax) at each of export countries 179 provided by the enterprise from the external system.

According to the embodiment, the service system 100 mainly provides a filtering mechanism for various complex information for the enterprise, and information such as the carbon tariff regulations 173 of various countries, product carbon footprint tax collection items 175, and the carbon credit price 177 can be easily filtered out according to the requirements of the enterprise. Therefore, the carbon tariff for products exported to various locations can be calculated by the computing circuit 101 based on the enterprise operation and sales data 171 provided by the enterprise, including export product items and the import destinations for export, an direct and indirect carbon emission list of the enterprise products, and information such as the paid fee at each of the export countries 179 provided by the enterprise.

It should be noted that, data collection via ways such as questionnaires will be performed for enterprises to perform carbon inventory to obtain organizational greenhouse gas inventory and product carbon footprint information. According to one embodiment, relevant questionnaires can be implemented in a carbon asset management report designed by using Microsoft Excel®, thereby conducting carbon inventory on the enterprise export product. For the EU CBAM as shown in Table 1, the relevant fields of the enterprise operation and sales data that need to be obtained include product manufacturing process, type of aggregated product or precursor, product tax number (CN Codes), tax code name (CN Name), product name, direct carbon emissions (direct specific embedded emissions, direct SEE), indirect carbon emissions (indirect SEE), total carbon emissions (total SEE), unit (such as metric tons of carbon dioxide equivalent, $tCO_2e$), share of emissions by default value, source for electricity emission factor (EF), etc.

Table 1:

| Product manufacturing process | Type of aggregated product or precursor | Product tax number | Product tax name | Product name | Direct carbon emissions | Indirect carbon emissions | Total carbon emissions | Unit | ... |
|---|---|---|---|---|---|---|---|---|---|
| Process A | Iron or steel products | 72071919 | Semi-finished ... | Name A | 0.915 | 0.396 | 1.311 | $tCO_2e/t$ | ... |
| ... | ... | ... | ... | ... | ... | ... | ... | ... | ... |
| ... | ... | ... | ... | ... | ... | ... | ... | ... | ... |
| ... | ... | ... | ... | ... | ... | ... | ... | ... | ... |

In this way, the service system 100 uses software methods and uses the communication module 105 to be connected to a first enterprise database 111 and a second enterprise database 112 through the network 10 according to the requirements of the enterprise (export products and import locations) to obtain the enterprise operation and sales data 171 from which product carbon footprints can be derived provided by the enterprise. For example, the first enterprise database 111 and the second enterprise database 112 obtain information such as a work order production information, a production material list, or a procurement material list, sales records, greenhouse gas inventory data, and supplier carbon coefficient. For example, the work order production information and the production material list or procurement material list recorded in the examples shown in Table 2 and Table 3, as well as the carbon emissions and carbon coefficients of the raw materials obtained from the raw materials recorded in Table 4 are obtained; further, relevant information recorded in the organizational greenhouse gas inventory can also be obtained as shown in Table 5 to calculate the carbon emissions and coefficients allocated to a manufacturing process from specific emission sources; the emission sources of products manufactured in the enterprise are as shown in Table 6; then, the service system 100 further assigns different allocation principles to the selected emission sources, such as volume allocation, weight allocation, processing time allocation, and quantity allocation. One example of allocation criterion setting is as shown in Table 7.

Finally, in the service system 100, the enterprise operation and sales database 107 can be established based on the enterprise operation and sales data 171 as shown in the above-mentioned example provided by the enterprise, and the carbon footprint of the product can be calculated according to the allocation setting and carbon coefficient. The results are as shown in Table 8.

Table 2:

| ... | | | ... | | | | | |
|---|---|---|---|---|---|---|---|---|
| ... | 2023/1/25 | 2023/1/25 | ... | 2023/1/15 | 2023/1/15 | 2023/1/15 | 2023/1/1 5 | Work order production date |
| ... | WO005 | WO005 | ... | WO002 | WO002 | WO001 | WO001 | Work order number |
| ... | FG0001 | FG0001 | ... | FG0002 | FG0002 | FG0001 | FG0001 | Finished product material number |
| ... | A-0002 | A-0001 | ... | A-0004 | A-0003 | A-0002 | A-0001 | Part number |
| ... | ... | ... | ... | ... | ... | ... | ... | ... |
| ... | MFG-02 | MFG-01 | ... | MFG-02 | MFG-02 | MFG-01 | MFG-01 | Manufacturer code |

(continued)

| | | | | | | | |
|---|---|---|---|---|---|---|---|
| ... | 15 | 15 | ... | 5 | 5 | 10 | 10 | Production quantity of work orders for finished/semifinished products |
| ... | 31 | 16 | ... | 6 | 5 | 20 | 10 | Actual consumption of parts |
| ... | | | ... | | | | | ... |
| ... | 178.3 | 178.3 | ... | 40.5 | 40.5 | 120.5 | 120.5 | Work order processing time (minutes) |

Table 3:

| | | | | | | |
|---|---|---|---|---|---|---|
| 2023/1/25 | 2023/1/25 | 2023/1/15 | 2023/1/15 | 2023/1/1 5 | 2023/1/15 | Work order production date |
| WO005 | WO005 | WO002 | WO002 | WO001 | WO001 | Work order number |
| FG0001 | FG0001 | FG0002 | FG0002 | FG0001 | FG0001 | Finished product material number |
| A-0002 | A-0001 | A-0004 | A-0003 | A-0002 | A-0001 | Part number |
| MFG-02 | MFG-01 | MFG-02 | MFG-02 | MFG-01 | MFG-01 | manufacturer code |
| 15 | 15 | 5 | 5 | 10 | 10 | Production quantity of work orders for finished/semifinished products |
| 31 | 16 | 6 | 5 | 20 | 10 | Actual consumption of parts |
| REV01 | REV04 | REV03 | REV01 | REV04 | REV03 | Part version information |
| 0.2 | 0.5 | 2.3 | 0.2 | 0.5 | 2.3 | Net weight of parts (Kg) |
| 0.54 | 1.02 | 3.45 | 0.54 | 1.02 | 3.45 | Part carbon coefficient (Kg $CO_2$e/metric ton) |

Table 4:

| Work order production date | Finished product material number | Semi-finished product work order production quantity | Actual consumption of parts | Net weight of parts (Kg) | Part carbon coefficient (KgCO$_2$e/metric ton) | Carbon emissions (KgCO$_2$e) | Carbon emission coefficient (KgCO$_2$e/each) |
|---|---|---|---|---|---|---|---|
| 2024M01 | FG00001 | 25 | 26 | 2.3 | 3.45134 | 0.20639 | |
| 2024M01 | FG00001 | 25 | 51 | 0.5 | 1.02342 | 0.02609 | |
| 2024M01 | FG00001 | 25 | 26 | 0.2 | 0.54424 | 0.00283 | 0.009412 |

Table 5:

| Category | Emission source items | Total emissions | |
| | Total emission source items | Emissions | Unit |
|---|---|---|---|
| Category 1 - Direct Greenhouse Gas (GHG) Emissions and Removals | | | |
| Category 1.1 - Direct emissions from stationary combustion | 12 | 35.1220 | Metric tons CO$_2$e |
| Category 1.2 - Direct emissions from mobile combustion | 15 | 34.2400 | Metric tons CO$_2$e |
| Category 1.3 - Direct process emissions and removals from industrial processes | 13 | 103.2000 | Metric tons CO$_2$e |
| Category 1.4 - Direct fugitive emissions from the release of GHGs in anthropogenic systems | 6 | 8.1500 | Metric tons CO$_2$e |
| Category 1.5 - Direct emissions and removals from land use, land use change and forestry (LULUCF) | 0 | 0.0000 | Metric tons CO$_2$e |

| | | | |
|---|---|---|---|
| Category 2 - Indirect GHG emissions from imported energy | | | |
| Category 2.1 - Indirect emissions from imported electricity | 1 | 475.000 | Metric tons $CO_2e$ |
| Category 2.2 - Indirect emissions from imported energy | 1 | 100.000 | Metric tons $CO_2e$ |
| Category 3 - Indirect GHG emissions from trans | | portation | |
| Category 3.1 - Emissions from upstream transport and distribution for goods | 5 | 23.0000 | Metric tons $CO_2e$ |
| Category 3.2 - Emissions from downstream transport and distribution for goods | 5 | 43.0000 | Metric tons $CO_2e$ |
| Category 3.3 - Emissions from employee commuting | 5 | 3.0000 | Metric tons $CO_2e$ |
| Category 3.4 - Emissions from business travel | 5 | 1.5000 | Metric tons $CO_2e$ |
| Category 3.5 - Emissions from client and visitor transport | 5 | 0.1230 | Metric tons $CO_2e$ |
| Category 4 - Indirect GHG emissions from products used by an organization | | | |
| Category 4.1 - Emissions from purchased goods and services | 5 | 52.0000 | Metric tons $CO_2e$ |
| Category 4.2 - Emissions associated with the production of energy purchased | 40 | 12.0000 | Metric tons $CO_2e$ |
| Category 4.3 - Emissions from the disposal of solid and liquid waste | 4 | 5.0000 | Metric tons $CO_2e$ |
| Category 4.4 - Emissions from purchased capital goods | 5 | 1.5000 | Metric tons $CO_2e$ |
| Category 4.5 - Emissions from leased assets | 0 | 0.0000 | Metric tons $CO_2e$ |
| Category 5 - Indirect GHG emissions associated with the use of products from the organization | | | |
| Category 5.1 - Emissions or removals from the use stage | 4 | 4 50,000.000 | Metric tons $CO_2e$ |
| Category 5.2 - Processing of sold products | 0 | 0.0000 | Metric tons $CO_2e$ |
| Category 5.3 - Emissions from end of life stage of the product | 4 | 121.0000 | Metric tons $CO_2e$ |
| Category 5.4 - Emissions from downstream leased assets | 0 | 0.0000 | Metric tons $CO_2e$ |
| Category 5.5 - Franchises | 0 | 0.0000 | Metric tons $CO_2e$ |
| Category 5.6 - Emissions from investments | 0 | 0.0000 | Metric tons $CO_2e$ |
| Category 6 - Indirect GHG emissions from other sources | | | |
| Category 6.1 - Other sources | 0 | 0.0000 | Metric tons $CO_2e$ |

Table 6:

| Category | Emission source items | Total emissions | | Related to manufacturing process (Y/N) |
|---|---|---|---|---|
| | Total emission source items | Emissions | Unit | |
| Category 1 - Direct GHG Emissions and Removals | | | | |
| Category 1.1 - Direct emissions from stationary combustion | 1 | 3.0000 | Metric tons $CO_2e$ | Y |
| | 1 | 2.0000 | Metric tons $CO_2e$ | N |
| | ... | ... | ... | ... |
| | 1 | 2.0000 | Metric tons $CO_2e$ | N |

| | | | | |
|---|---|---|---|---|
| | 1 | 4.0000 | Metric tons $CO_2e$ | Y |
| Category 1.2 - Direct emissions from mobile combustion | 15 | 34.2400 | Metric tons $CO_2e$ | |
| Category 1.3 - Direct process emissions and removals from industrial processes | 13 | 103.2000 | Metric tons $CO_2e$ | |
| Category 1.4 - Direct fugitive emissions from the release of GHGs in anthropogenic systems | 6 | 8.1500 | Metric tons $CO_2e$ | Same as above |
| Category 1.5 - Direct emissions and removals from land use, land use change and forestry (LULUCF) | 0 | 0.0000 | Metric tons $CO_2e$ | |
| Category 2 - Indirect GHG emissions from imported energy | | | | |
| Category 2.1 - Indirect emissions from imported electricity | 1 | 475.000 | Metric tons $CO_2e$ | Y |
| Category 2.2 - Indirect emissions from imported energy | 1 | 100.000 | Metric tons $CO_2e$ | Y |

Table 7:

| Category | Emission source items | Total emissions | Related to manufacturi | Exclude product lines and | Allocation criteria settings |
|---|---|---|---|---|---|

| | Total emission source items | Emissions | Unit | | | |
|---|---|---|---|---|---|---|
| Category 1 - Direct GHG Emissions and Removals | | | | | | |
| Category 1.1 - Direct emissions from stationary combustion | 1 | 3.0000 | Metric tons $CO_2e$ | Y | Allocated across the full scope | weight distribution principle |
| | 1 | 2.0000 | Metric tons $CO_2e$ | N | No settings required | No settings required |
| | … | … | … | … | No settings required | No settings required |
| | 1 | 2.0000 | Metric tons $CO_2e$ | N | No settings required | No settings required |
| | 1 | 4.0000 | Metric tons $CO_2e$ | Y | Exclude NB product line | Volume distribution principle |
| Category 1.2 - Direct emissions from mobile combustion | 15 | 34.2400 | Metric tons $CO_2e$ | Same as above | Same as above | Same as above |
| Category 1.3 - | 13 | 103.200 | Metric | | | |

| | | | | | | |
|---|---|---|---|---|---|---|
| Direct process emissions and removals from industrial processes | | 0 | tons $CO_2e$ | | | |
| Category 1.4 - Direct fugitive emissions from the release of GHGs in anthropogenic systems | 6 | 8.1500 | Metric tons $CO_2e$ | | | |
| Category 1.5 - Direct emissions and removals from land use, land use change and forestry (LULUCF) | 0 | 0.0000 | Metric tons $CO_2e$ | | | |
| Category 2 - Indirect GHG emissions from imported energy | | | | | | |
| Category 2.1 - Indirect emissions from imported electricity | 1 | 475.000 | Metric tons $CO_2e$ | Y | Allocated across the full scope | Processing time allocation principles |
| Category 2.2 - Indirect emissions from imported energy | 1 | 100.000 | Metric tons $CO_2e$ | Y | Allocated across the full scope | Processing time allocation principles |

Table 8:

| | | | | | | | |
|---|---|---|---|---|---|---|---|
| 2023M01 | 2023M01 | 2023M01 | 2023M01 | 2023M01 | 2023M01 | 2023M01 | Work order production date |
| FG00007 | FG00006 | FG00005 | FG00004 | FG00003 | FG00002 | FG00001 | Finished product material number |
| 23 | 15 | 16 | 16 | 32 | 35 | 25 | Semi-finished product work order production quantity |
| 231.45 | 232.32 | 215.32 | 234.12 | 323.14 | 350.30 | 298.80 | Work order processing time (minutes) |
| 12.28% | 12.32% | 11.42% | 12.42% | 17.14% | 18.58% | 15.85% | Distribution ratio |
| 35 | | | | | | | Total carbon emissions |
| 4.296454 | 4.312604 | 3.99703 | 4.346018 | 83998515 | 6.502692 | 5.546686 | Carbon emissions (KgCO$_2$e) |
| 0.186802 | 0.287507 | 0.249814 | 0.271626 | 0.187453 | 0.185791 | 0.221867 | Carbon emission coefficient (KgCO$_2$e/each) |

EP 4 738 217 A1

The enterprise operation and sales database 107 further includes external systems connected by the service system 100 through the network 10 via the communication module 105, such as the carbon tariff regulations 173 of the import country obtained from a carbon tariff and regulations database 115 through an application programming interface (API), product carbon footprint tax collection items 175, and the carbon credit price 177. Afterwards, based on whether or not specific products are subject to the carbon tariff collection (according to an HS code) regulated by an energy resource use allocation criteria, the product carbon footprint can be obtained only for products subject to tax collection.

In this way, the service system 100 can know the countries that the enterprise products are exported to from the above-mentioned corporate operation data, and can filter out the taxable items and emission sources by querying the items that are subject to the carbon tariff collection in each of the countries. The service system 100 further obtains the carbon credit prices of each of the countries (each of the countries has a corresponding server that allows querying carbon credit prices and items and prices that are taxed in each of the countries) and tax exemption quotas, so as to form a carbon leakage exposure factor.

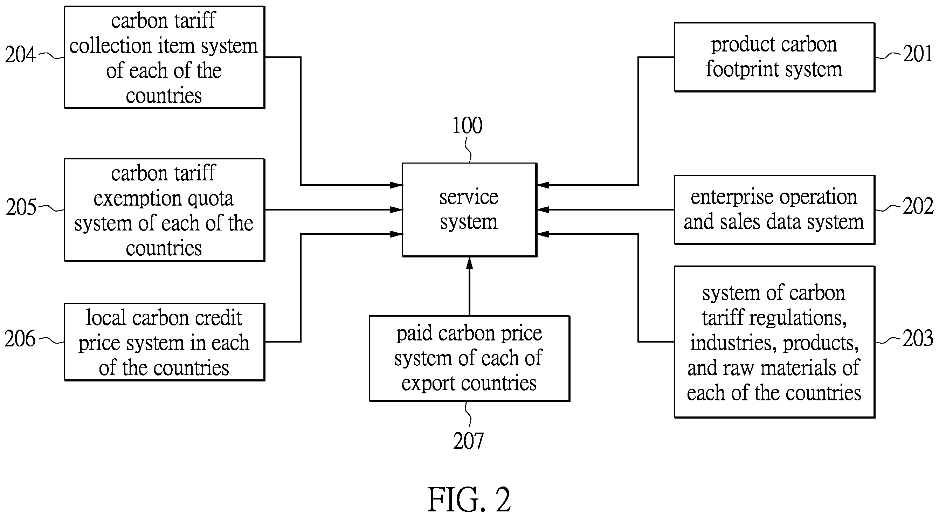

Information obtained by the service system 100 by connecting to an external system (such as the carbon tariff and regulations database 115 shown in the above embodiment) may dynamically change or be revised at different stages; specifically, each country will set different carbon tariff items, carbon credit prices, tax exemption prices, etc., and details may be referred to the schematic diagram of the connection relationship between the service system and the external system provided in the present invention shown in FIG. 2.

As shown in FIG. 2, the service system 100 is connected to external systems through the network and application programming interface (API), such that the service system 100 can obtain various relevant information for calculating the carbon tariff to perform complex calculations and simulate a corporate operation carbon border tariff. The external system can be implemented by servers consisting of public information of various governments and server systems established by various enterprises. According to various data that is provided, the data can be divided into a product carbon footprint system 201 for obtaining product carbon footprints; an enterprise operation and sales data system 202 can be stored in various enterprise systems to provide enterprise operation and sales data; a system of carbon tariff regulations, industries, products, and raw materials of each of the countries 203 can be used to obtain carbon tariff regulations of various countries, including various taxable product tax numbers such as the HS code that is used globally and can correspond to EU import tax number (CN Code); the carbon tariff collection item system of each of the countries 204 is used to obtain taxable items in each of the countries; a carbon tariff exemption quota system of each of the countries 205 is used to obtain the different tax exemption quotas set by each of the countries for different products; a local carbon credit price system in each of the countries 206 is used to obtain the carbon credit price uniquely set by each of the countries; and a paid carbon price system of each of export countries 207 is used to obtain the paid tax of the enterprise in a location that the product is manufactured in; the paid amount can be exempted from the carbon tariff after the product is exported to the import location.

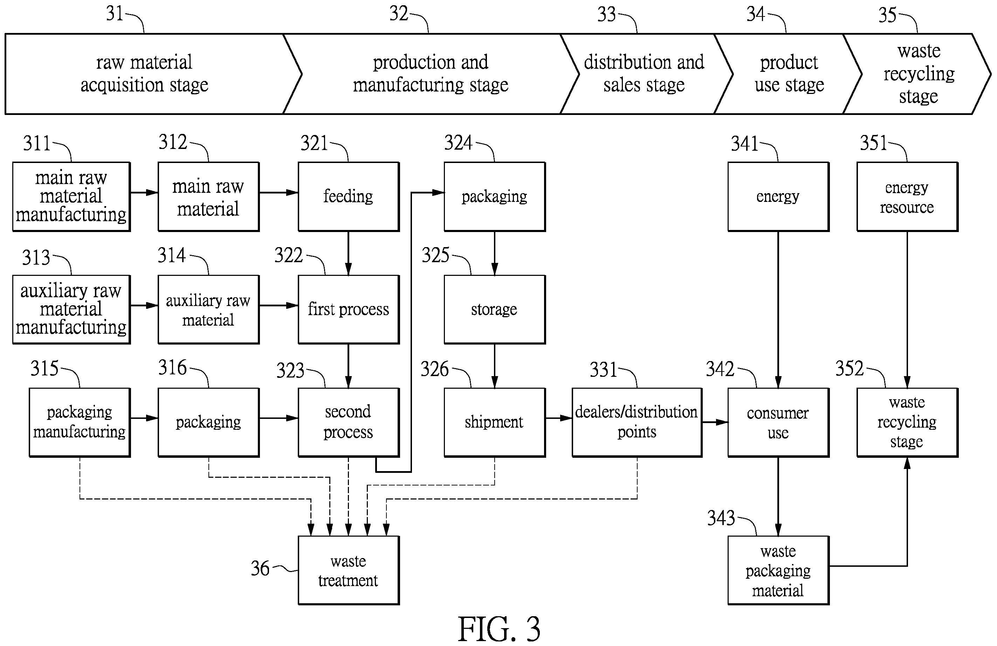

When calculating the product carbon tariff for an enterprise export product to each of the import locations, the carbon footprint of each of the products need to be obtained in the pre-processing operation, and details can be referred to in a schematic diagram of a product carbon footprint process in the enterprise operational sales data as shown in FIG. 3.

A complete carbon footprint of a product at least needs to include a manufacturing stage (raw materials, and processing and manufacturing), transportation, use and waste recycling. One embodiment is as shown in FIG. 3; in the service system, the carbon footprint of the enterprise export product is obtained through carbon inventory. Here, according to the energy resource use allocation criteria, a full scope of organizational greenhouse gases (GHG) is allocated to a raw material acquisition stage 31, a production and manufacturing stage 32, a distribution and sales stage 33, a product use stage 34, and a waste recycling stage 35.

In the raw material acquisition stage 31, the carbon footprint of the raw material acquisition stage 31 is formed via the generation of carbon emissions from processes such as a main raw material manufacturing 311 and the main raw material 312 that is manufactured, an auxiliary raw material manufacturing 313 and an auxiliary raw material 314 that is manufactured, and a packaging manufacturing 315 and a packaging 316 that is manufactured, as well as raw material transportation and waste (including waste water and waste gas) treatment 36 after the manufacturing of raw materials.

In the production and manufacturing stage 32, the carbon footprint of the production and manufacturing stage 32 is formed via the generation of carbon emissions from processes such as a feeding 321, a first process 322 and a second process 323 as shown in the figure, a subsequent packaging 324, a storage 325, and a shipment 326, as well as subsequent transportation processes, and the waste (including waste water and waste gas) treatment 36.

In the distribution and sales stage 33, the carbon footprint of the distribution and sales stage 33 is formed via the generation of carbon emissions from processes such as a transportation of packaged products to dealers/distribution points 331, including the waste treatment 36 of waste packaging materials generated at the dealers/distribution points 331.

In the product use stage 34 of a consumer, the carbon footprint of the product use stage 34 is formed via the generation of carbon emissions from processes such as delivering the product to the consumer, a consumer use 342 of an energy 341 and the generation of waste packaging materials 343, as well as an energy resource 351 used for a waste recycling 35 in a final product waste recycling stage 352.

However, in the settings of different countries, the carbon tariff is collected on the carbon footprints of specific stages, specific processes, and the corresponding products of direct or indirect carbon emissions at each stage.

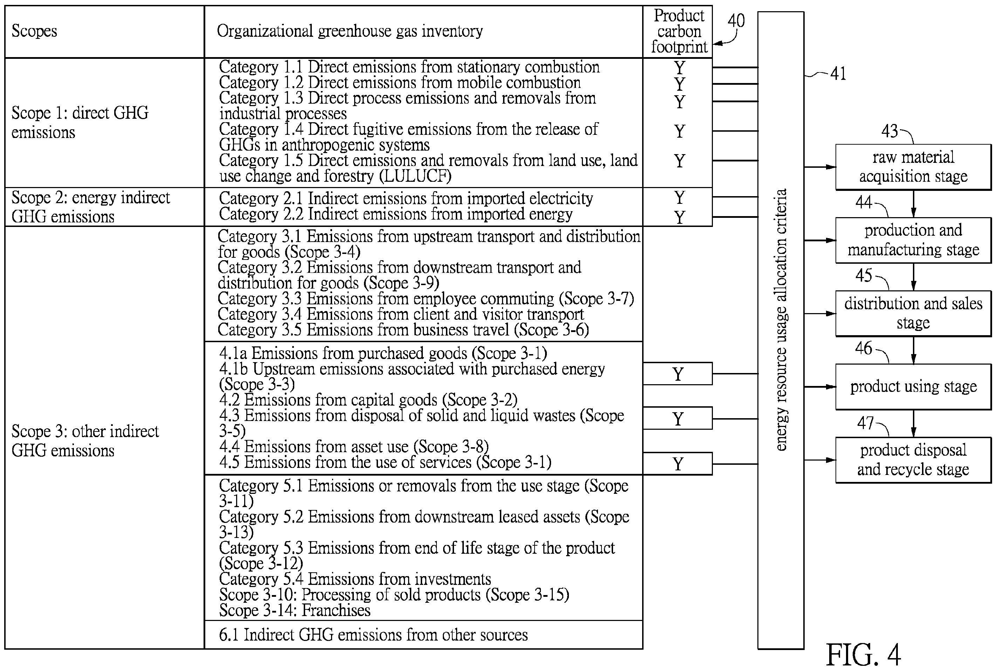

FIG. 4 then shows a schematic diagram of a data relationship between organizational greenhouse gas inventory categories and product carbon footprint stages that can be used to calculate the carbon tariff.

This figure shows that carbon inventory information 40 includes the full scope of the organizational greenhouse gases and can include a scope 1 including direct GHG emissions, a scope 2 including energy indirect GHG emissions, and a scope 3 including other indirect GHG emissions. Then, based on the greenhouse gas emissions defined in each of the scopes, the corresponding organizational greenhouse gas inventory and corresponding product carbon footprint are obtained.

Details of each of the scopes can be referred to the text in the figure. Scope 1 includes: 1.1: direct emissions from stationary combustion sources, 1.2: direct emissions from mobile combustion sources, 1.3: direct process emissions and removals from industrial processes, 1.4: direct fugitive emissions from the release of GHGs in anthropogenic systems, and 1.5: direct emissions and removals from land use, land use change and forestry; scope 2 includes 2.1: indirect emissions from imported electricity and 2.2: indirect emissions from imported energy; scope 3 includes 3.1: emissions from upstream transport and distribution for goods (scope 3-4 of GHG protocol), 3.2: emissions from downstream transport and distribution for goods (scope 3-9 of GHG protocol), 3.3: emissions from employee commuting (scope 3-7 of GHG protocol), 3.4: emissions from client and visitor transport, and 3.5: emissions from business travel (scope 3-6 of GHG protocol); 5.1: emissions or removals from the use stage (scope 3-11 of GHG protocol), 5.4: emissions from downstream leased assets (scope 3-13 of GHG protocol), 5.3: emissions from end of life stage of the product (scope 3-12 of GHG protocol), 5.6: emissions from investments (scope 3-15 of GHG protocol), 5.2: emissions from processing of sold products (scope 3-10 of GHG protocol), and 5.5: franchises (scope 3-14 of GHG protocol); and 6.1: indirect GHG emissions.

In the process of performing a carbon inventory, a corresponding carbon footprint is formed based on the organizational greenhouse gases generated in each scope and stage of product manufacturing. According to the illustrated embodiment, the service system can allocate carbon inventory information 40 according to energy resource usage allocation criteria 41, such as allocating the full scope of organizational greenhouse gases to the corresponding stages of product manufacturing. In this embodiment, an example is as shown in FIG. 3. The product carbon footprint stages shown in FIG. 4 include a raw material acquisition stage 43, a production and manufacturing stage 44, a distribution and sales stage 45, a product using stage 46, and a product disposal and recycle stage 47, so as to achieve the purpose of carbon inventory.

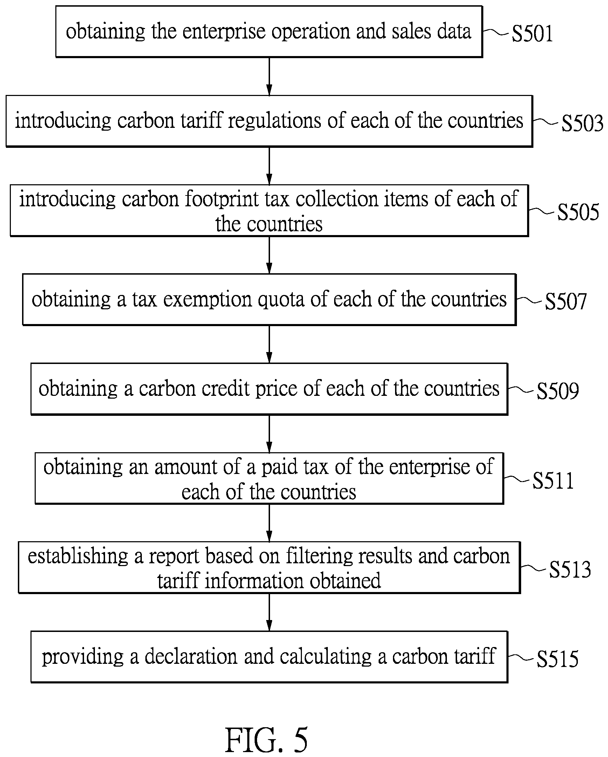

The method for calculating the carbon tariff is executed by the service system as described in the above embodiments. For the embodiment of the method, reference can be made to the flowchart shown in FIG. 5.

The service system obtains the enterprise operation and sales data and obtains product carbon emissions and related information, which can include a quantity, a carbon footprint, and product carbon emissions, etc. of the enterprise export product (step S501). Then, carbon tariff regulations of various countries are introduced from the external system. Specifically, the carbon tariff regulations of the import location of the enterprise export product (step S503) are introduced. At the same time, the carbon footprint tax collection items of each of the countries are introduced (step S505) to obtain a tax exemption quota of each of the countries (step S507) and a carbon credit price of each of the countries (step S509). Further, an amount of a paid tax of the enterprise of each of the countries is obtained from a report of the enterprise (step S511). In this way, in the service system, a carbon tariff declaration report for the enterprise export product to the import location is established based on the product quantity, the product carbon emissions, the carbon credit price, the tax exemption quota, and the paid tax (step S513), and the declaration is provided to the import location and a carbon tariff is calculated (step S515).

In step S513 of creating the carbon tariff declaration report, according to one embodiment, a premade explanation of a report for EU carbon tariff declaration includes a content directory, a usage guide, and a code list. Further, a main reporting content includes manufacturer information, manufacturer emission source data, emission and energy, production processes, purchase precursor, tools, and advanced guidance, as well as information explained to applicants, including a summary of process, a summary of products, and a summary of communication.

In step S515, based on the enterprise operation and sales data provided by the enterprise, the carbon credit price, the tax exemption quota, and the product carbon footprint tax collection items of the import country obtained from the external system, the carbon tariff is calculated, and one embodiment of calculating the carbon tariff can be referred to a formula of the EU CBAM.

According to the specifications of the EU CBAM, embedded emissions of the greenhouse gases during the production process of the product needs to be obtained, that is, the carbon emissions described by carbon dioxide ($CO_2$) or the carbon dioxide equivalent ($CO_2e$) of related greenhouse gases, including direct emissions and indirect emissions. Corresponding to the product carbon footprint as described in FIG. 3, the embedded emissions are the carbon emissions from raw materials and processing during the manufacturing stage. The carbon tariff is such as CBAM certificates, in which specific embedded emissions (SEE) needs to be calculated. SEE refer to the number of carbon dioxide equivalents contained per ton of a specific product. For calculating carbon emissions, the carbon emissions are divided into SEE of simple goods and SEE of complex goods.

The SEE of simple goods are as shown in Formula 1, in which $SEE_g$ represents the carbon emissions of specific products ($tCO_2e/t$), $AttrEm_g$ represents the carbon emissions generated by the production of goods, the carbon emissions ($AttrEm_g$) include direct carbon emissions (DirEm) and indirect carbon emissions (IndirEm), and $AL_g$ represents the quantity of produced goods (can be represented in tons).

Formula 1 includes:

$$: SEE_g = AttrEm_g/AL_g.$$

The SEE of the complex goods are as shown in Formula 2, in which $SEE_g$ represents the carbon emissions of specific products ($tCO_2e/t$), $AttrEm_g$ represents the carbon emissions generated by the production of goods, which also includes direct carbon emissions (DirEm) and indirect carbon emissions (IndirEm). Further, $EE_{InpMat}$ represents a total embedded emissions of input materials (i.e., raw materials) used in the production process as shown in Formula 3, and $AL_g$ represents the quantity of produced goods (can be represented in tons). M in Formula 3 represents raw materials, and is used to calculate the total embedded emissions in an i-th raw material ($M_i$) to an n-th raw material ($M_n$).

Formula 2 includes:

$$SEE_g = [AttrEm_g + EE_{InpMat}]/AL_g;$$

$SEE_g = [AttrEm_g + EE_{InpMat}]/AL_g$; and Formula 3 includes: $EE_{InpMat} = \sum_{i=1}^{n} M_i \cdot SEE_i$.

After the SEE are calculated according to the above-mentioned Formula 1 or Formula 2, the carbon tariff can be calculated. Then, the CBAM certificate practiced in the EU can be implemented, and the carbon tariff is equal to the product carbon emissions (embedded emissions) multiplied by the carbon credit price and then multiplied by the product quantity.

Furthermore, the number of CBAM certificates can represent the carbon tariff that an enterprise must pay from an export country (such as the location of the enterprise) to an import country (such as a specific country, the European Union). Reference can be made to Formula 4, in which the obligation amount is such as a CBAM obligation. The CBAM obligation is calculated by the carbon tariff incurred after the enterprise products enter the EU and complete the declaration obligation subtracting a carbon fee paid by the enterprise at the export country (i.e., a production location), so as to obtain an adjusted carbon tariff for entering an import country (such as the EU).

Formula 4 includes: [(actual carbon emissions of products produced) - (tax exemption quota)] × (total product import amount) × (weekly average carbon credit price) = (obligation amount); and (obligation amount) - (amount of tax paid at the export location) = (adjustment amount).

The adjustment amount is the carbon tariff payable by the enterprise when exporting products to the import country (in this case, the EU). Under the EU CBAM, the number of CBAM certificates that the enterprise should bear will be calculated.

For example, when an actual emission of a product A is 10 $tCO_2$/ton, the free emission quota granted to the product A by the EU is 2 $tCO_2$/ton, the weekly average carbon credit price is 50 euros/$tCO_2$, the export country does not impose a carbon fee (0 euros/$tCO_2$), and a total of 5 tons of the product A are imported into the EU, the carbon tariff required for the product A imported into the EU is calculated through the following steps: (1) a number of CBAM certificates for the product A = (actual emissions - free emission quota for EU-related products) × total import amount = (10-2) × 5 = 40 CBAM certificates; (2) the CBAM obligation amount of the product A = number of CBAM certificates × weekly average carbon credit price = 40 × 50 = 2,000 euros; and (3) the CBAM adjustment amount of the product A = CBAM obligation amount - tax paid at the export country = 2000 - 0 = 2000 euros.

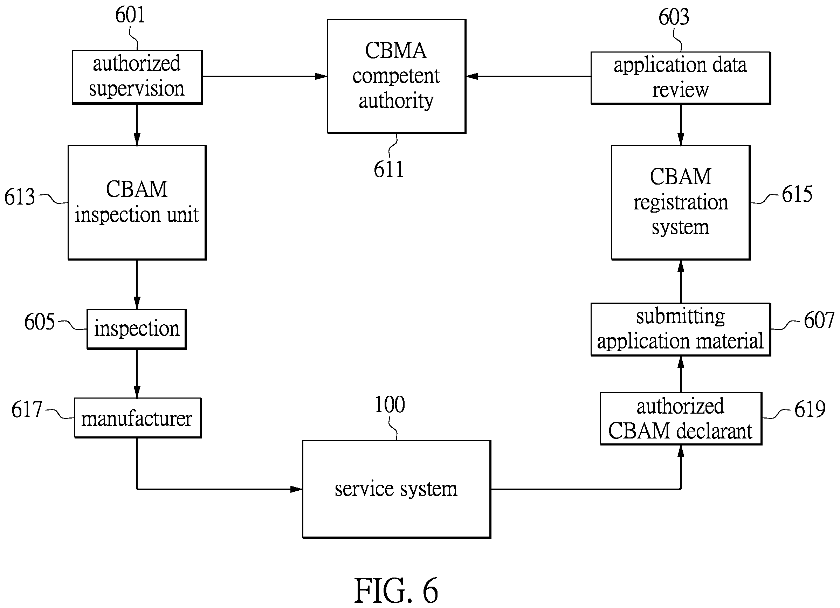

FIG. 6 then shows a schematic diagram of the service system being applied to the EU CBAM to declare a carbon tariff. In this embodiment, the service system 100 may be used for enterprises to register for the EU CBAM to generate declaration materials for EU carbon tariff declarations.

Further, a carbon tariff inspection agency has been established by the EU Executive Commission, and this example shows that an authorized supervision 601 is given to a CBAM competent authority 611 and a CBAM inspection unit 613. The CBAM inspection unit 613 conducts inspections 605 to the manufacturer 617 that manufactures and sells the products, such that the manufacturer 617 can submit a request for the service system 100 to run carbon tariff calculation provided in the present invention to calculate the carbon tariff and generate a carbon tariff declaration report. On the other hand, a relevant application data review 603 will be handed over to the CBAM competent authority 611 and a CBAM registration system 615 for execution.

The manufacturer 617 submits a request to the service system 100 to calculate the carbon tariff and generate a carbon tariff declaration report. According to the above embodiment of the method for calculating the carbon tariff, a CBAM report can be created, in which the manufacturer 617 submits declaration information that is as described in the above embodiments. The declaration information needs to include total product import emissions, CBAM product carbon emissions, a product size, apparatus carbon emissions, direct embedded emissions, indirect embedded emissions, manufacturing procedures, and qualification parameters. Relevant optional items may include manufacturing apparatus operators, manufacturing apparatus information, supporting documents of carbon emissions, and an amount of carbon tax paid, so as to calculate the carbon tariff payable when the products enter the EU.

After the relevant application materials are generated by the service system 100, submitting application materials 607 to a CBAM registration system 615 through an authorized CBAM declarant 619 qualified to provide application in the CBAM registry. After the application materials are reviewed, the carbon tariff declared by the manufacturer 617 can be reviewed through the CBMA competent authority 611.

In conclusion, in order for enterprises to easily process the complexity of the carbon tariff collection on imported goods by various countries and the evolving regulations, the present invention provides a carbon tariff calculation method and a service system to execute the method. According to the above-mentioned embodiments, the service system allows an enterprise to obtain the carbon footprint and carbon emissions of their products. Through the service system, the enterprise obtains the carbon credit price, tax exemption quota, and paid tax provided by the external system to calculate the carbon tariff payable by the enterprise for exporting products to the import location. Due to different regulations in different countries, complex tax collection items, and carbon credit prices that may be changed at any time, the service system can still calculate the product carbon footprint and allow enterprises to systematically calculate the carbon tariff for the enterprise export product.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

**Claims**

1. A carbon tariff calculation method, running on a computer system, and the carbon tariff calculation method being **characterized by** comprising:

   obtaining enterprise operation and sales data (171) from an enterprise database to obtain a product quantity, a carbon footprint, and product carbon emissions of an enterprise export product;
   introducing carbon tariff regulations (173) of an import location that the enterprise export product is imported to, including obtaining a carbon credit price (177) and tax collection items of the import location;
   introducing a tax exemption quota of the import location;
   obtaining an amount of a paid tax of an enterprise; and
   calculating a carbon tariff based on the product quantity, the product carbon emissions, the carbon credit price (177), the tax exemption quota, and the paid tax, and creating a carbon tariff declaration report for the enterprise export product to the import location.

2. The carbon tariff calculation method according to claim 1, wherein the carbon tariff is equal to the product carbon emissions multiplied by the carbon credit price (177), and then multiplied by the product quantity.

3. The carbon tariff calculation method according to claim 1, wherein the computer system obtains a carbon credit price (177), a tax exemption quota, and product carbon footprint tax collection items of the import location from an external system, calculates the carbon tariff accordingly, and obtains the carbon tariff declaration report for the enterprise export product to the import location.

4. The carbon tariff calculation method according to claim 1, wherein, in the computer system, the carbon footprint of the enterprise export product is obtained through carbon inventory, and a full scope of organizational greenhouse gas is allocated to a raw material acquisition stage (31), a production and manufacturing stage (32), a distribution and sales stage (33), a product using stage (34), and a product disposal and recycle stage (35).

5. The carbon tariff calculation method according to claim 4, wherein the full scope of the organizational greenhouse gases includes direct greenhouse gas emissions, energy indirect greenhouse gas emissions, and other indirect greenhouse gas emissions.

6. The carbon tariff calculation method according to claim 5, wherein the carbon tariff is equal to the product carbon emissions multiplied by the carbon credit price (177), and then multiplied by the product quantity.

7. The carbon tariff calculation method according to claim 6, wherein the carbon tariff of the enterprise export product from an export location to the import location is equal to:

[(actual carbon emissions of products produced) - (tax exemption quota)] $\times$ (total product import amount) $\times$ (weekly average carbon credit price (177)) = (obligation amount); wherein, (obligation amount) - (amount of tax paid at the export location) = (adjustment amount).

8. The carbon tariff calculation method according to claim 7, wherein the carbon tariff is calculated by calculating a number of Carbon Border Adjustment Mechanism (CBAM) certificates implemented by the European Union (EU).

9. A service system (100) that runs a carbon tariff calculation, **characterized by** comprising:

a computer system including a computing circuit (101), a memory module (103), a communication module (105), and an enterprise operation and sales database (107), wherein the computer system is connected to an enterprise database and a carbon tariff and regulations database (115) through the communication module (105); wherein the service system (100) executes a carbon tariff calculation method that includes:

obtaining enterprise operation and sales data (171) from the enterprise database to obtain a product quantity, a carbon footprint, and product carbon emissions of an enterprise export product;
introducing carbon tariff regulations (173) of an import location that the enterprise export product is imported to, including obtaining a carbon credit price (177) and tax collection items of the import location;
introducing a tax exemption quota of the import location;
obtaining an amount of a paid tax of an enterprise; and
calculating a carbon tariff based on the product quantity, the product carbon emissions, the carbon credit price (177), the tax exemption quota, and the paid tax, and creating a carbon tariff declaration report for the enterprise export product to the import location.

10. The service system (100) according to claim 9, wherein the carbon tariff is equal to the product carbon emissions multiplied by the carbon credit price (177), and then multiplied by the product quantity.

11. The service system (100) according to claim 9, wherein the service system (100) further obtains the tax exemption quota and the carbon credit price (177) of the import location from a carbon tariff and regulations database (115) of the import location through an application program interface.

12. The service system (100) according to claim 11, wherein the service system (100) is further connected via respective application programming interfaces to a product carbon footprint system (201) to obtain product carbon footprints; an enterprise operation and sales data system (202) that provides the enterprise operation and sales data (171); a system of carbon tariff regulations, industries, products, and raw materials of each of countries (203) to obtain the carbon tariff regulations (173) of each of the countries including tax numbers of various taxable products; a carbon tariff collection item system of each of the countries (204) to obtain taxable items in each of the countries; a carbon tariff exemption quota system in each of the countries (205) to obtain tax exemption quotas set by each of the countries for the products; a local carbon credit price system in each of the countries (206) to obtain the carbon credit price (177) set by each of the countries; and a paid carbon price system of each of export countries (207) to obtain the paid tax of the enterprise in a location that the product is manufactured in.

13. The service system (100) according to claim 9, wherein, in the service system (100), the carbon footprint of the enterprise export product is obtained through carbon inventory, and a full scope of organizational greenhouse gas is allocated to a raw material acquisition stage (31), a production and manufacturing stage (32), a distribution and sales stage (33), a product using stage (34), and a product disposal and recycle stage (35).

**14.** The service system (100) according to claim 13, wherein the carbon tariff is equal to the product carbon emissions multiplied by the carbon credit price (177), and then multiplied by the product quantity.

FIG. 1

```
┌─────────────────────┐                              ┌─────────────────────┐
│    carbon tariff    │                              │   product carbon    │
204 ─│ collection item system│                         │  footprint system   │─ 201
│    of each of the   │                              └─────────────────────┘
│     countries       │
└─────────────────────┘
                                    100
                                     │
┌─────────────────────┐     ┌──────────────┐         ┌─────────────────────┐
│    carbon tariff    │     │              │         │ enterprise operation│
205 ─│ exemption quota     │────▶│   service    │◀────────│ and sales data system│─ 202
│ system of each of the│    │   system     │◀────    └─────────────────────┘
│     countries       │     │              │◀───
└─────────────────────┘     └──────────────┘         ┌─────────────────────┐
                                    ▲                  │  system of carbon   │
┌─────────────────────┐            │                  │  tariff regulations,│
│  local carbon credit│     ┌──────────────┐          │industries, products,│─ 203
206 ─│ price system in each│     │ paid carbon price│       │ and raw materials of│
│   of the countries  │     │ system of each of│       │ each of the countries│
└─────────────────────┘     │ export countries │       └─────────────────────┘
                            └──────────────┘
                                    │
                                   207
```

FIG. 2

FIG. 3

EP 4 738 217 A1

| Scopes | Organizational greenhouse gas inventory | Product carbon footprint |
|---|---|---|
| Scope 1: direct GHG emissions | Category 1.1 Direct emissions from stationary combustion | Y |
| | Category 1.2 Direct emissions from mobile combustion | Y |
| | Category 1.3 Direct process emissions and removals from industrial processes | Y |
| | Category 1.4 Direct fugitive emissions from the release of GHGs in anthropogenic systems | Y |
| | Category 1.5 Direct emissions and removals from land use, land use change and forestry (LULUCF) | Y |
| Scope 2: energy indirect GHG emissions | Category 2.1 Indirect emissions from imported electricity | Y |
| | Category 2.2 Indirect emissions from imported energy | Y |
| Scope 3: other indirect GHG emissions | Category 3.1 Emissions from upstream transport and distribution for goods (Scope 3-4) Category 3.2 Emissions from downstream transport and distribution for goods (Scope 3-9) Category 3.3 Emissions from employee commuting (Scope 3-7) Category 3.4 Emissions from client and visitor transport Category 3.5 Emissions from business travel (Scope 3-6) | |
| | 4.1a Emissions from purchased goods (Scope 3-1) 4.1b Upstream emissions associated with purchased energy (Scope 3-3) 4.2 Emissions from capital goods (Scope 3-2) 4.3 Emissions from disposal of solid and liquid wastes (Scope 3-5) 4.4 Emissions from asset use (Scope 3-8) 4.5 Emissions from the use of services (Scope 3-1) | Y Y Y |
| | Category 5.1 Emissions or removals from the use stage (Scope 3-11) Category 5.2 Emissions from downstream leased assets (Scope 3-13) Category 5.3 Emissions from end of life stage of the product (Scope 3-12) Category 5.4 Emissions from investments Scope 3-10: Processing of sold products (Scope 3-15) Scope 3-14: Franchises | |
| | 6.1 Indirect GHG emissions from other sources | |

40

41

energy resource usage allocation criteria

43 — raw material acquisition stage
44 — production and manufacturing stage
45 — distribution and sales stage
46 — product using stage
47 — product disposal and recycle stage

EP 4 738 217 A1

FIG. 4

obtaining the enterprise operation and sales data ~S501

↓

introducing carbon tariff regulations of each of the countries ~S503

↓

introducing carbon footprint tax collection items of each of the countries ~S505

↓

obtaining a tax exemption quota of each of the countries ~S507

↓

obtaining a carbon credit price of each of the countries ~S509

↓

obtaining an amount of a paid tax of the enterprise of each of the countries ~S511

↓

establishing a report based on filtering results and carbon tariff information obtained ~S513

↓

providing a declaration and calculating a carbon tariff ~S515

FIG. 5

FIG. 6

EP 4 738 217 A1

| | Europäisches Patentamt<br>European Patent Office<br>Office européen des brevets | **EUROPEAN SEARCH REPORT** | **Application Number**<br>EP 25 15 1496 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TW M 640 876 U (WAN ALI YOU TECH CORPORATION LTD [TW]) 11 May 2023 (2023-05-11) | 1-3,6-14 | INV.<br>G06Q10/067<br>G06Q10/0831 |
| Y | * paragraph [0003] *<br>* paragraph [0005] *<br>* paragraph [0012] - paragraph [0019] * | 4,5,13 | G06Q30/018<br>G06Q40/10<br>G06Q40/12 |
| Y | CN 118 051 559 A (SUZHOU ZHIHUILU INTELLIGENT TECH CO LTD) 17 May 2024 (2024-05-17)<br>* page 6 - page 7 *<br>* page 10 * | 4,5,13 | |
| A | TW I 836 815 B (YEN SU CHUAN [TW]) 21 March 2024 (2024-03-21)<br>* the whole document * | 1-14 | |

TECHNICAL FIELDS
SEARCHED    (IPC)

G06Q

The present search report has been drawn up for all claims

| Place of search | Date of completion of the search | Examiner |
|---|---|---|
| Munich | 24 May 2025 | Shivaldova, Veronika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

The present search report has been drawn up for all claims — examiner Shivaldova, Veronika, Munich, 24 May 2025.

27

## ANNEX TO THE EUROPEAN SEARCH REPORT
## ON EUROPEAN PATENT APPLICATION NO.

EP 25 15 1496

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2025

| Patent document cited in search report | | Publication date | Patent family member(s) | Publication date |
|---|---|---|---|---|
| TW M640876 | U | 11-05-2023 | NONE | |
| CN 118051559 | A | 17-05-2024 | NONE | |
| TW I836815 | B | 21-03-2024 | NONE | |

EPO FORM P0459

For more details about this annex : see Official Journal of the European Patent Office, No. 12/82